# EUROPEAN PATENT APPLICATION

(11) **EP 2 320 222 A1**
(43) Date of publication of application: **11.05.2011**
(21) Application number: 09174976.2
(22) Date of filing: 04.11.2009
(51) Int. Cl.: G01N 27/403, H01L 27/02

(54) **Electrostatic discharge (ESD) protection for biosensors**

(71) Applicant: NXP B.V., 5656 AG Eindhoven (NL)
(72) Inventor: Gridelet, Evelyne, Redhill, Surrey RH1 1DL (GB); De Langen, Michel, Redhill, Surrey RH1 1DL (GB); Sterckx, Eric, Redhill, Surrey RH1 1DL (GB); Van der Werf, Ronald, Redhill, Surrey RH1 1DL (GB)
(74) Representative: Burton, Nick

(57) **Abstract**

A biosensor assembly includes a fluidic system. A biosensor is positioned for direct contact with a fluid as the fluid flows through the fluidic system. An electrostatic discharge (ESD) electrode provides ESD protection for the biosensor. The ESD electrode can be engaged while the fluidic system of the assembly is primed, and then disengaged to prevent leakage currents from the fluid while the biosensor is in operation.

## Description

### BACKGROUND OF THE INVENTION

This invention relates to biosensors. In particular, this invention relates to the provision of electrostatic discharge (ESD) protection for biosensors.

Known biosensors typically comprise a number of electrodes connected to electronics for processing signals received from the electrodes. Biosensors of this kind can be incorporated into a larger assembly including a fluidic system. In operation, fluid flows through the fluidic system, and past the electrodes of the biosensor. In this way, the electrodes of the biosensor are able to produce a signal which is related to a property of the fluid or of substances carried in the fluid.

Biosensors of the kind described above can be manufactured using semiconductor processing techniques, such as those developed for manufacturing CMOS devices. These kinds of biosensors are typically provided on a semiconductor substrate. The sensor electrodes provided at a surface of the substrate, and signal processing electronics are provided elsewhere in (or on) the substrate. Typically, the electronics to which the electrodes of the biosensor are connected are highly sensitive, and are designed to operate on extremely small currents (∼1 nA) and voltages (∼100 mV). The electronics are delicate and are, in particular, vulnerable to surges in current associated with, for example, electrostatic discharge (ESD) events. ESD events are liable therefore to damage the delicate electronics, potentially ruining the biosensor assembly.

ESD events can occur when a user touches part of the larger biosensor assembly, in order to operate it. For example, a user may need to touch part of the assembly to carry out a priming operation, in which a syringe is used to inject fluid into the fluidic system.

It may be possible to provide a ground strap, whereby the user can ground him or herself prior to using the biosensor assembly. However, this solution is inconvenient for the user, and he or she may neglect to use the strap.

Accordingly, it is desirable to provide an alternative approach for protecting against ESD events in a biosensor assembly.

### SUMMARY OF THE INVENTION

Aspects of the invention are set out in the accompanying independent and dependent claims. Combinations of features from the dependent claims may be combined with features of the independent claims as appropriate and not merely as explicitly set out in the claims.

According to an aspect of the invention, there is provided a biosensor assembly comprising:
a fluidic system;
a biosensor positioned for direct contact with a fluid in the fluidic system; and
an electrostatic discharge (ESD) electrode for providing ESD protection for the biosensor.

The ESD electrode, which is incorporated into the biosensor assembly itself, provides protection against ESD events, and does not require the user to ground themselves using, for example, an earth strap.

The ESD electrode can be positioned upstream of the biosensor, since current surges caused by ESD events typically travel from the point of entry of the fluid into the fluidic system. For example, ESD currents arising from discharge from a user operating a syringe to inject fluid into the fluidic system would typically arrive from a location upstream of the biosensor.

The ESD electrode can be connected to ESD protection circuitry, for carrying away charge from the ESD electrode.

The ESD electrode and/or the ESD protection circuitry can be integrated into the biosensor.

In one embodiment, means can be provided for electrically disengaging the ESD electrode, to prevent leakage currents flowing from the fluid through the ESD electrode. In this way, the ESD electrode can be engaged while fluid is injected in the fluidic system (this is typically the time at which ESD events are most likely to take place) and the disengaged once the fluidic system is properly primed. The disengagement of ESD electrode prevents leakage currents flowing through the ESD electrode, which may otherwise be detrimental to the operation of the electrodes of the biosensor.

The means for electrically disengaging the ESD electrode may include a switch for disconnecting the ESD electrode. Alternatively, a shutter could be provided to shut off and electrically isolate the ESD electrode from the fluid.

According to another aspect of the invention, there is provided a method of operating a biosensor assembly, the method comprising:
engaging an electrostatic discharge (ESD) electrode of the assembly to provide ESD protection for a biosensor of the assembly;
priming the assembly by injecting a fluid into the fluidic system, wherein the fluid makes contact with the ESD electrode and one or more electrodes of the biosensor;
disengaging the ESD electrode to prevent leakage currents flowing from the fluid through the ESD electrode; and
operating the biosensor.

### BRIEF DESCRIPTION OF THE DRAWINGS

Embodiments of the present invention will be described hereinafter, by way of example only, with reference to the accompanying drawings in which like reference signs relate to like elements and in which:
Figure 1 schematically shows a biosensor assembly in accordance with a first embodiment of the invention;
Figure 2 schematically shows a biosensor assembly in accordance with a second embodiment of the invention;
Figure 3 schematically shows a biosensor assembly in accordance with a third embodiment of the invention;
Figure 4 schematically shows a biosensor assembly in accordance with a fourth embodiment of the invention;
Figures 5 and 6 schematically show a biosensor assembly in accordance with a fifth embodiment of the invention;
Figure 7 schematically illustrate a method of operating a biosensor assembly in accordance with an embodiment of the invention.

### DETAILED DESCRIPTION

Embodiments of the present invention are described in the following with reference to the accompanying drawings.

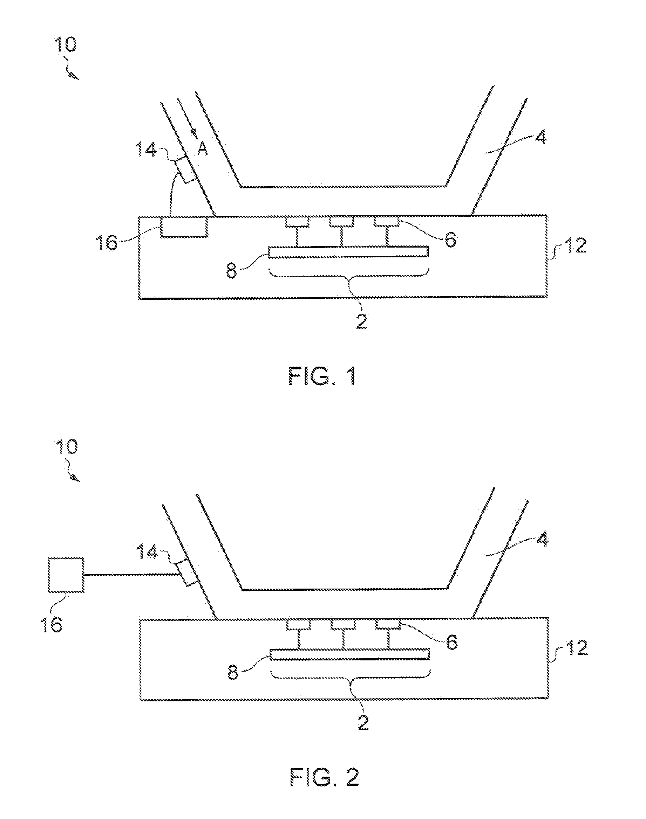

A first embodiment of the invention is schematically illustrated in Figure 1. In this embodiment there is provided a biosensor assembly 10 which includes a fluidic system 4 and a biosensor 2. The fluidic system 4 can, for example, comprise one or more fluidic channels or vessels through which a fluid, containing a substance to be operated upon by the biosensor 2, can pass. In this example, the general direction of fluid flow through the fluidic system is shown by the arrow labelled A in Figure 1.

As shown in Figure 1, the biosensor 2 may typically be provided in a semiconductor substrate 12, such as a silicon substrate which has been processed using, for example, CMOS manufacturing techniques. The substrate 12 can be mounted on an opening in the fluidic system 4, such that the biosensor 2 is positioned for direct contact with a fluid flowing through the fluidic system 4. In this example, the biosensor 2 includes one or more electrodes 6 which are positioned to come into contact with the fluid in the fluidic system 4, and circuitry 8, which is connected to the one or more electrodes 6 to receive signals produced by the electrodes 6 in response to their interaction with the fluid in the fluidic system 4.

In this embodiment, the biosensor assembly 10 further includes an electrostatic discharge (ESD) electrode 14 for providing ESD protection for the biosensor 2. The ESD electrode 14 in this embodiment is provided off-chip and is positioned to be in contact with a fluid in the fluidic system 4, whereby current flows resulting from ESD events can be diverted away from the biosensor 2, thereby to prevent damage to the electrodes 6 and circuitry 8. The ESD electrode 14, which may typically comprise a metallic contact positioned on an inner wall of the fluidic system 4, can be connected to an ESD protection circuit 16. The ESD protection circuit 16 can, for example, be provided within the substrate 12 (see Figure 1). Alternatively, and as illustrated in Figure 2, the ESD protection circuit 16 can be provided off-chip.

The ESD protection circuit 16 can comprise any suitable conventional protection circuit known in the art.

Returning to Figure 1, the direction of fluid flow through the fluidic system 4 is shown by the arrow labelled A. In this example therefore, the ESD electrode 14 is provided upstream of the electrode 6 of the biosensor 2. This positioning is advantageous since, as described in more detail below, the currents resulting from an ESD event more commonly arrive from a location upstream of the biosensor 2. Nevertheless, other positions for the ESD electrode 14 are envisaged. For example, the ESD electrode 14 could be provided downstream from the electrode 6, or across from the electrode 6 on an opposite side of a fluid channel or vessel of the fluidic system to which the substrate 12 is attached. In some embodiments, the ESD electrode 14 may be shaped to substantially surround the biosensor 2. For example, the ESD electrode 14 may comprise a closed loop shape (e.g. ring-shaped), with the biosensor positioned inside the loop.

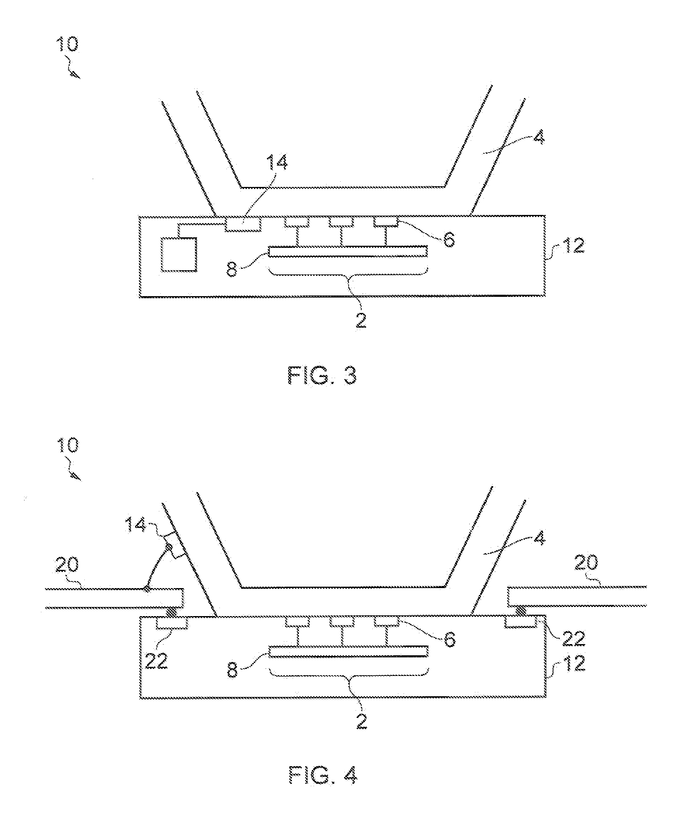

A further embodiment is illustrated in Figure 3. In this example, the ESD electrode 14 is provided on-chip, in the same substrate 12 as the electrodes 6 and circuitry 8 of the biosensor 2. Additionally, in this example, the ESD protection circuit 16 is also provided on-chip, in the substrate 12. In this way, a compact package can be provided which requires relatively few assembly steps, other than to attach the substrate 12 to the fluidic system 4 such that the electrodes 6 and the ESD electrode 14 are positioned for direct contact with a fluid in the fluidic system 4.

In a further example, a flip-chip construction can be used. Thus, in Figure 4, the substrate 12 is provided with pads 22 which are used to mount and connect the substrate to a further substrate 20, such as a printed circuit board (PCB). An opening 21 in the PCB 20 allows the fluidic system 4, or at least a portion thereof, to be received, for attachment to the substrate 12. In the example shown in Figure 4, the ESD electrode 14 is provided off-chip, and is connected to ESD protection circuitry which may be provided on the PCB 20. However, other arrangements, where the ESD electrode 14 is provided on-chip are also envisaged. Thus, a combination of the flip-chip arrangement and the on-chip ESD electrode construction of Figure 3 is envisaged. It is also envisaged that the ESD protection circuit in the example of Figure 4 may be provided on-chip, as described above in relation to Figure 1.

In some examples, the ESD electrode 14 may be employed for purposes other than the provision ESD protection. For example, in use (i.e. when the biosensor 2 is in operation), a reference potential may be applied to the ESD electrode, thereby to provide a reference for the operation of the electrodes 6 of the biosensor 2.

In other examples, and as described in more detail below, the use of the ESD electrode 14 during operation of the biosensor 2 may be prohibited.

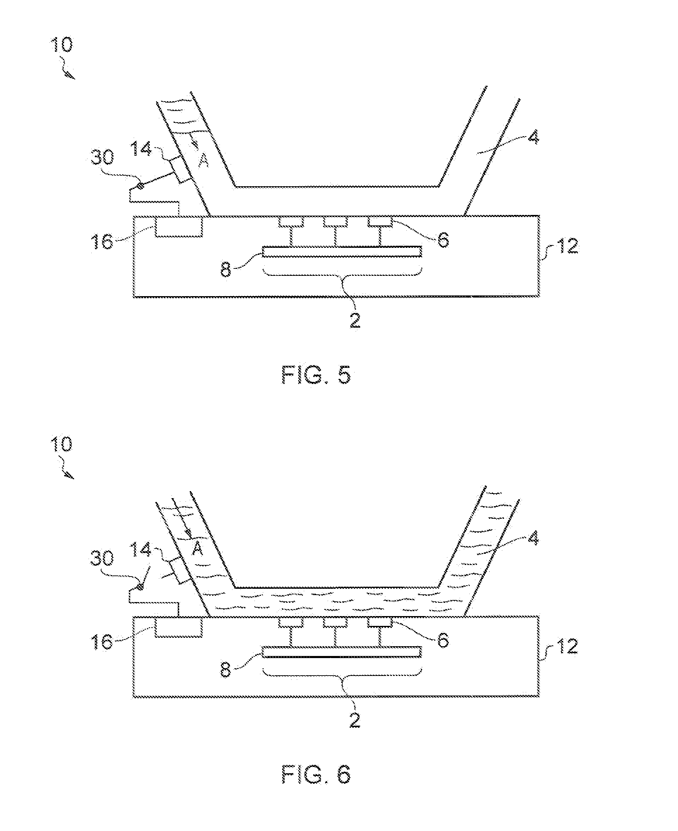

A further embodiment of the invention is shown in Figures 5 and 6. In this embodiment, which is similar to the embodiment shown in Figure 1, the biosensor assembly 10 is provided with means for engaging and disengaging (for example, electrically connecting and electrically disconnecting) the ESD electrode 14. In one example, these means comprise a switch 30, which can be used to electrically connect and electrically disconnect the ESD electrode 14 from the ESD protection circuit 16. Figure 5 shows the switch 30 in the closed position, with the ESD electrode 14 connected to the ESD protection circuit 16, while Figure 6 shows the switch 30 in the open position, with the ESD electrode 14 electrically isolated. Although the examples of Figures 5 and 6 are essentially a modification of the example shown in Figure 1, it is also envisaged that a switch 30 or other such means may be incorporated into the other examples described above in relation to, for example, Figures 2-4. It is also envisaged that alternative means for engaging and disengaging the ESD electrode 14 from the fluid in the fluidic system 4 can be provided. For example, it is envisaged that some form of shutter may be located adjacent the ESD electrode 14. The shutter could be used to close off the ESD electrode 14 from the fluidic system 4, thereby to prevent direct contact between the ESD electrode 14 and a fluid contained within the fluidic system 4.

The purpose of the means for electrically disengaging the ESD electrode 14 is to prevent leakage currents from flowing through the ESD electrode 14 while the biosensor 4 is in operation. These leakage currents may otherwise have an adverse effect on the operation of the biosensor 2. For example, the leakage currents may adversely distort the signals produced by the electrodes 6 of the biosensor 2.

In accordance with an embodiment of the invention, it has been recognised that ESD events are most likely to happen while the fluidic system 4 is being primed by a user. In particular, priming the fluidic system 4 generally may involve injecting a fluid into the fluidic system 4, which requires the user to operate a syringe containing the fluid. By touching the syringe or some other part of the overall system, the user may cause an ESD event. However, once the fluidic system 4 is primed, the user no longer needs to come into contact with the biosensor assembly 10, whereby the probability of an ESD event is substantially diminished.

Accordingly, by providing an ESD electrode 14 with means for engaging and disengaging the ESD electrode 14, an embodiment of this invention can on the one hand provide ESD protection for the sensitive components of the biosensor 2 while the fluidic system 4 is being primed, while on the other hand allowing the ESD electrode 14 to be electrically isolated during operation of the biosensor 2, thereby to prevent leakage currents to the ESD electrode 14 having an adverse effect on the operation of the biosensor 2.

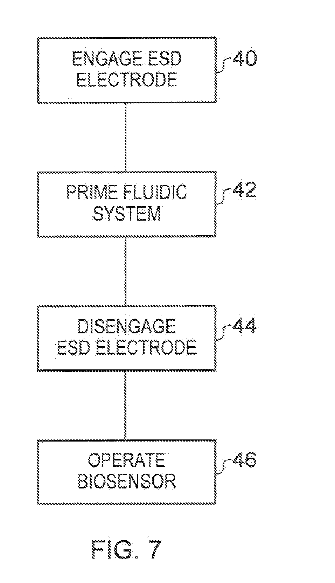

A method of operating the biosensor assembly 10 will now be described with reference to Figure 7.

In a first step 40, the user of the biosensor assembly 10 engages the ESD electrode 14 by, for example, closing the switch 30 shown in Figure 5. The ESD electrode 14 is now connected to the ESD protection circuit 16, thereby to provide appropriate ESD protection for the biosensor 2.

In a next step 42, the user primes the fluidic system 4, for example, by injecting a fluid into the fluidic system 4 using a syringe. The general direction of fluid flow into the fluidic system 4 in this example is shown by the arrow labelled A in Figure 5.

Once the fluidic system 4 has been primed, the user can, in a next step 44, disengage the ESD electrode, for example, by opening the switch 30 as shown in Figure 6 or by in some other way isolating the ESD electrode 14 from the fluid in the fluidic system 4 and/or the ESD protection circuit 16. The fluidic system 4 is now primed for use, and the leakage of currents through the ESD electrode 14 has been prevented.

In a next step 46 shown in Figure 7, the biosensor is operated to interact and, for example, analyse substances contained within the fluid in the fluidic system 4.

Further steps are also envisaged, such as the reengagement of the ESD electrode 14 followed by the removal of the fluid from the fluidic system 4, perhaps also using a syringe as described above.

Some degree of automation of the method described above is also envisaged. For example, the biosensor assembly 10 may be arranged automatically to engage the ESD electrode 14 by closing a switch or opening a shutter of the kind described above, in response to detecting that the fluidic system 4 is being primed (e.g. by detecting the introduction of fluid into the fluidic system 4, or by detecting the operation of the syringe). Furthermore, the biosensor assembly 10 may be arranged automatically to disengage the ESD electrode 14 in response to a determination that the biosensor 2 is in operation.

Accordingly, there has been described a biosensor assembly that includes a fluidic system. A biosensor is positioned for direct contact with a fluid as the fluid flows through the fluidic system. An electrostatic discharge (ESD) electrode provides ESD protection for the biosensor. The ESD electrode can be engaged while the fluidic system of the assembly is primed, and then disengaged to prevent leakage currents from the fluid while the biosensor is in operation.

Although particular embodiments of the invention have been described, it will be appreciated that many modifications/additions and/or substitutions may be made within the scope of the claimed invention.

## Claims

1. A biosensor assembly comprising:
a fluidic system;
a biosensor positioned for direct contact with a fluid in the fluidic system; and
an electrostatic discharge (ESD) electrode for providing ESD protection for the biosensor.

2. The biosensor assembly of claim 1, wherein the ESD electrode is positioned upstream of the biosensor.

3. The biosensor assembly claim 1 or claim 2, comprising means for electrically disengaging the ESD electrode, to prevent leakage currents flowing from the fluid through the ESD electrode.

4. The biosensor assembly of claim 3, wherein said means for electrically disengaging the ESD electrode comprises a switch.

5. The biosensor assembly of claim 3, wherein said means for electrically disengaging the ESD electrode comprises shutter, for shutting off the ESD electrode from the fluid.

6. The biosensor assembly of any preceding claim, wherein the biosensor comprises:
a series of electrodes; and
electronic circuitry for processing signals received from the electrodes.

7. The biosensor assembly of any preceding claim, wherein the ESD electrode is integrated into the biosensor.

8. The biosensor assembly of any preceding claim, further comprising ESD protection circuitry connected to the ESD electrode.

9. The biosensor assembly of claim 8, wherein the ESD protection circuitry is integrated into the biosensor.

10. The biosensor assembly of any preceding claim, operable to apply a potential to the ESD electrode, to provide a reference voltage for the biosensor.

11. A method of operating a biosensor assembly, the method comprising:
engaging an electrostatic discharge (ESD) electrode of the assembly to provide ESD protection for a biosensor of the assembly;
priming the assembly by injecting a fluid into the fluidic system, wherein the fluid makes contact with the ESD electrode and one or more electrodes of the biosensor;
disengaging the ESD electrode to prevent leakage currents flowing from the fluid through the ESD electrode; and
operating the biosensor.
